# FASCICULE DE BREVET EUROPEEN

(11) **EP 1 333 956 B1**
(45) Date de publication et mention de la délivrance du brevet: **23.01.2008**
(21) Numéro de dépôt: 01976414.1
(22) Date de dépôt: 12.10.2001
(51) Int. Cl.: B23K 26/22, B23K 26/42

(54) **DISPOSITIF ET PROCEDE DE SOUDO-COLLAGE POUR ASSEMBLER RIGIDEMENT DES TOLES EN METAL**
VORRICHTUNG UND VERFAHREN ZUM FÜGENKLEBEN ZUM FESTEN ZUSAMMENFÜGEN VON METALLISCHEN BLECHEN
BOND-WELDING DEVICE AND METHOD FOR RIGIDLY ASSEMBLING SHEET METAL PARTS

(30) Priorité: 16.10.2000 FR 0013229
(43) Date de publication de la demande: 13.08.2003
(73) Titulaire: RENAULT S.A.S., 92100 Boulogne Billancourt (FR)
(72) Inventeur: CRIQUI, Bernard, F-92150 Suresnes (FR); FAYS, Samuel, F-91440 Bures s/Yvette (FR); JOLY, Marion, F-78000 Versailles (FR)
(86) Numéro de dépôt international: PCT/FR2001/003161
(87) Numéro de publication internationale: WO 2002/032613

(56) Documents cités:
- EP-A- 0 924 021
- DE-A- 4 339 661
- FR-A- 1 391 750
- US-A- 3 967 091
- US-A- 4 195 215
- US-A- 4 727 232

## Description

L'invention concerne un dispositif et un procédé de soudo-collage pour assembler rigidement des tôles en métal, notamment des pièces de carrosserie.

Il est usuel d'assembler des pièces de carrosserie par des soudures électriques par points ; cependant, ces points espacés de 50 mm en moyenne font effet de liaison boutonnée non parfaitement rigide pour transférer les efforts de pièce à pièce. Il est souhaitable dans certaines circonstances d'améliorer la raideur de l'assemblage par rapport à cette liaison discontinue.

Des liaisons continues sont réalisables par soudure continue par laser, par collage seul, ou par des procédés hybrides utilisant les deux techniques tels que le soudo-collage ou le rivetage-collage.

La soudure laser traditionnelle, notamment TIG ou YAG, nécessite un investissement matériel coûteux, par exemple de 3 MF à comparer avec les quelques 350 kF que coûte une installation de soudure électrique par points.

Le collage seul n'est pas envisageable car il présente une résistance trop faible (inférieure à 30 MPa) et anisotrope.

C'est pourquoi le collage est renforcé par des points soudés ou rivetés, ce qui pénalise le prix de revient de fabrication et le temps du cycle. Les documents US 3967091, US 4195215, US4727232 et EP 0924021 montrent différents exemples de tels procédés mixtes.

De plus le point soudé ou le rivetage nécessite de pincer les deux épaisseurs à assembler, d'où la nécessité d'avoir un accès par les deux faces et d'avoir une largeur de bord (feuillure) importante (> 15 mm) nécessaire pour l'appui des outils utilisés tels qu'une électrode de soudage ou une bouterolle de rivetage.

Le but de l'invention est de proposer un procédé et un dispositif de soudage-collage qui ne présente pas les inconvénients proposés, et permette d'obtenir une rigidité supérieure à celle des assemblages discontinus.

L'invention atteint son but grâce à un procédé de soudage-collage de deux tôles, du type selon lequel on dispose un cordon de colle à l'interface des tôles et on soude par points les deux tôles, caractérisé en ce qu'on soude par conduction par diode laser, au moyen d'un outil présentant un organe presseur unilatéral des tôles définissant une zone d'appui périphérique délimitée à l'intérieur de laquelle passe le rayon laser produit par la diode laser.

La puissance du laser est avantageusement de l'ordre de 1,5 à 3 kW, ce qui suffit à créer l'irradiation thermique nécessaire à la soudure en accédant par un seul côté. En limitant l'irradiation thermique à une fenêtre d'environ 2 à 2,5 mm², on a une densité de puissance de 150kW/cm² qui permet de réaliser des points soudés par transparence en un temps moyen de 1 à 1,5 s sur des tôles d'acier de 0,8mm.

L'invention concerne également le dispositif de soudage lui-même présentant un organe presseur unilatéral des tôles définissant une zone d'appui périphérique délimitée à l'intérieur de laquelle passe le rayon laser produit par une diode laser. L'organe presseur a avantageusement une forme convergente et/ou arrondie à son extrémité de manière à pouvoir suivre la tôle supérieure et la presser contre la tôle inférieure afin de supprimer le jeu d'interface entre les deux tôles. Avantageusement, entre deux soudures par points, on chauffe la colle à l'interface entre les tôles en faisant suivre la surface de la tôle supérieure à l'organe presseur en présence du faisceau laser.

L'invention permet d'obtenir une résistance équivalente à celle obtenue avec la soudure laser continue tout en allégeant de 15% la carrosserie. De plus, comme le soudage par diode laser procède par conduction, il est plus tolérant que les procédés traditionnels aux jeux éventuels d'interface entre les tôles. Le procédé est unilatéral, c'est-à-dire qu'il permet d'assembler sur des sections creuses en aveugle, sans accès à la face cachée. Ceci permet de supprimer les découpes d'accessibilité des pinces à souder, coûteuses en outillage et pénalisantes en rigidité structurelle. Par ailleurs, le procédé de l'invention permet de limiter le cas échéant le bord feuillure à une largeur inférieure à 10 mm. Enfin, le coût d'équipement est d'environ 350kF/kW, ce qui est deux fois moindre que le coût pour les lasers YAG fibrés.

D'autres caractéristiques et avantages de l'invention ressortiront à la lecture de la description qui va suivre, en référence aux dessins annexés sur lesquels :
- la figure 1 est une vue schématique de l'installation comportant l'outil conforme à l'invention,
- la figure 2 est une vue de détail en coupe longitudinale de l'extrémité de l'outil de la figure 1,
- la figure 3 est une coupe de l'outil selon la ligne III-III de la figure 2.

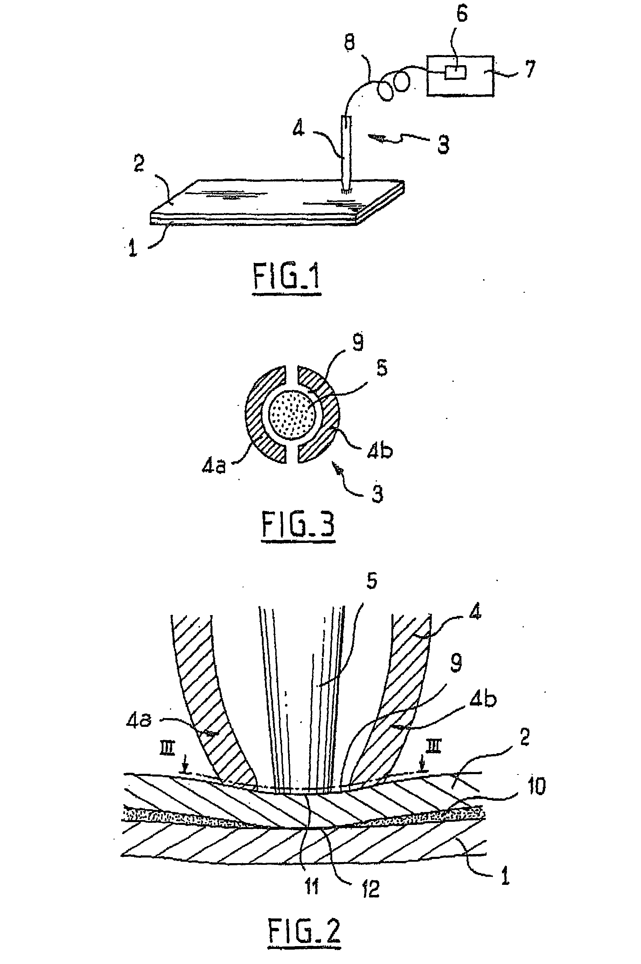

La figure 1 montre deux tôles d'acier respectivement inférieure 1 et supérieure 2, par exemple de 0,8 mm d'épaisseur, sur lesquelles appuie l'extrémité de l'outil 3. Avant de superposer les tôles 1 et 2, on a réalisé un cordon collé 10 déposé par robot sur la surface supérieure de la pièce support en tôle 1. La colle utilisée est par exemple une colle de type époxy 1044, avantageusement additionnée d'un fluidiseur.

L'outil 3 comprend un organe presseur creux 4 composé au moins à son extrémité de deux doigts presseurs 4a, 4b séparés par une fente et entourant un faisceau laser 5 formé par une diode laser 6 d'un générateur 7. Une fibre optique 8 (par exemple d'une section de 2 mm²) peut conduire le faisceau laser depuis la diode 6 jusqu'à l'organe 4. L'organe 4, voire tout le dispositif laser, peuvent être intégrés dans un robot anthropomorphe non représenté.

Le faisceau 5 forme sur la tôle supérieure un spot d'environ 2 mm² ou plus. Les deux doigts presseurs 4a, 4b ménagent entre les bords du faisceau 5 et leur extrémité un intervalle annulaire 9 supérieur à environ 2mm de manière à éviter la détérioration de l'outil à proximité du chauffage. Les doigts de l'outil sont avantageusement réalisés en un métal réfractaire thermiquement conducteur, tel que le tungstène ou le cuivre, équipé d'un circuit de refroidissement par circulation interne de fluide.

Comme le montre la figure 2, lorsqu'on appuie sur la pièce supérieure 2 au moyen des doigts 4a, 4b écartés, sans faisceau laser, leur forme permet de conférer une force d'appui maximale au centre 11 de façon à conférer à la tôle supérieure une convexité orientée vers l'interface des deux tôles, en exerçant une force de préférence supérieure à 50 daN. De ce fait, on chasse à la périphérie de la zone d'appui 12 la colle 10, et on assure le contact des tôles.

Puis on irradie par la diode laser entre les deux doigts 4a, 4b pendant une durée d'environ 1 à 2 s pour former le point soudé par conduction thermique à partir de la surface.

En fin d'opération de soudage, on relève les deux doigts pour les translater sur un autre point à réaliser.

Le temps de cycle est rapide, une vitesse d'exécution de 1,5 m/min permet de réaliser environ 15 points par mètre.

On a aussi la possibilité de faire un passage en continu à une vitesse moyenne de l'ordre de 0,5 m/min, adaptée pour chauffer par conduction au défilé l'interface à une température supérieure à 200°C. Ce chauffage par conduction au défilé assure une précuisson à la colle qui prend prise. Ceci permet de remplacer l'opération supplémentaire de prépolymérisation par chauffage par induction qui est quelquefois nécessaire avant le passage en protection par cataphorèse, pour maîtriser la géométrie des assemblages.

## Revendications

1. Procédé de soudage-collage de deux tôles, du type selon lequel on dispose un cordon de colle (10) à l'interface des tôles (1, 2) et on soude par points les deux tôles (1, 2), **caractérisé en ce qu'**on soude par conduction par diode laser (6), au moyen d'un outil (3) présentant un organe presseur unilatéral (4) des tôles définissant une zone d'appui périphérique délimitée à l'intérieur de laquelle passe un faisceau laser (5) produit par la diode laser (6).

2. Procédé selon la revendication 1, **caractérisé en ce que**, préalablement au soudage, on appuie avec l'organe presseur de manière à chasser la colle à l'interface entre les tôles.

3. Procédé selon l'une quelconque des revendications 1 ou 2, **caractérisé en ce qu'**entre deux soudures par points, on chauffe la colle à l'interface entre les tôles en faisant suivre la surface de la tôle supérieure (2) à l'organe presseur (4) en présence du faisceau laser.

4. Dispositif de soudage-collage pour la mise en oeuvre du procédé des revendications 1 à 3, **caractérisé en ce qu'**il comprend un organe presseur unilatéral (4) définissant une zone d'appui périphérique délimitée à l'intérieur de laquelle passe le rayon laser (5) produit par une diode laser (6).

5. Dispositif selon la revendication 4, **caractérisé en ce que** l'organe presseur (4) a une forme convergente et/ou arrondie à son extrémité.

6. Dispositif selon l'une quelconque des revendications 4 ou 5, **caractérisé en ce que** l'organe presseur (4) est constitué par deux doigts presseurs (4a,4b).

7. Dispositif selon l'une quelconque des revendications 4 à 6, **caractérisé en ce que** la puissance de la diode laser est d'environ 1,5 à 3 kW.

## Claims

1. Method of bond-welding two metal sheets, of the type in which a bead of adhesive (10) is placed at the interface between the metal sheets (1, 2) and the two metal sheets (1, 2) are spot-welded, **characterized in that** welding is carried out by conduction via a diode laser (6), by means of a tool (3) having a pressing member (4) for pressing on one side of the metal sheets, which defines a bounded peripheral bearing zone within which a laser beam (5) produced by the diode laser (6) passes.

2. Method according to Claim 1, **characterized in that**, prior to the welding, the pressing member is pressed so as to expel the adhesive at the interface between the metal sheets.

3. Method according to either of Claims 1 and 2, **characterized in that** between two spot-welding operations, the adhesive at the interface between the metal sheets is heated by making the surface of the upper metal sheet (2) follow the pressing member (4) in the presence of the laser beam.

4. Bond-welding device for implementing the method of Claims 1 to 3, **characterized in that** it includes a pressing member (4), for pressing on one side, which defines a bounded peripheral bearing zone within which the laser beam (5) produced by a diode laser (6) passes.

5. Device according to Claim 4, **characterized in that** the pressing member (4) has a convergent and/or rounded shape at its end.

6. Device according to either of Claims 4 and 5, **characterized in that** the pressing member (4) is formed by two pressing fingers (4a, 4b).

7. Device according to any one of Claims 4 to 6, **characterized in that** the power of the diode laser is about 1.5 to 3 kW.

## Patentansprüche

1. Verfahren zum Heißkleben von zwei Blechen des Typs, bei dem man einen Klebstoffwulst (10) an der Schnittstelle der Bleche (1, 2) anordnet und die zwei Bleche (1, 2) punktschweißt, **dadurch gekennzeichnet, dass** man durch Wärmeleitung durch Laserdiode (6) mittels eines Werkzeugs (3) schweißt, das ein einseitiges Druckorgan (4) der Bleche aufweist, das eine periphere Auflagezone definiert, in deren Innerem abgegrenzt ein Laserstrahl (5), der von der Laserdiode (6) erzeugt wird, durchgeht.

2. Verfahren nach Anspruch 1, **dadurch gekennzeichnet, dass** man vor dem Schweißen mit dem Druckorgan derart andrückt, dass der Klebstoff zur Schnittstelle zwischen den Blechen getrieben wird.

3. Verfahren nach einem der Ansprüche 1 oder 2, **dadurch gekennzeichnet, dass** man zwischen zwei Punktschweißungen den Klebstoff an der Schnittstelle zwischen den Blechen erhitzt, indem man das Druckorgan (4) in Gegenwart des Laserstrahls der Oberfläche des oberen Blechs (2) folgen lässt.

4. Vorrichtung zum Heißkleben zum Umsetzen des Verfahrens nach Anspruch 1 bis 3, **dadurch gekennzeichnet, dass** es ein einseitiges Druckorgan (4) aufweist, das eine periphere Auflagezone definiert, in deren Innerem abgegrenzt der Laserstrahl (5), der von einer Laserdiode (6) erzeugt wird, durchläuft.

5. Vorrichtung nach Anspruch 4, **dadurch gekennzeichnet, dass** das Druckorgan (4) eine konvergierende und/oder an ihrem Ende gerundete Form hat.

6. Vorrichtung nach einem der Ansprüche 4 oder 5, **dadurch gekennzeichnet, dass** das Druckorgan (4) aus zwei Druckfingern (4a, 4b) besteht.

7. Vorrichtung nach einem der Ansprüche 4 bis 6, **dadurch gekennzeichnet, dass** die Leistung der Laserdiode etwa 1,5 bis 3 kW beträgt.
